# EUROPÄISCHE PATENTSCHRIFT

(11) **EP 3 248 236 B1**
(45) Veröffentlichungstag und Bekanntmachung des Hinweises auf die Patenterteilung: **01.04.2020**
(21) Anmeldenummer: 16700924.0
(22) Anmeldetag: 19.01.2016
(51) Int. Cl.: H01M 8/1004, H01M 8/0273, H01M 8/0276, H01M 8/24, H01M 8/1018

(54) **ELEKTROCHEMISCHE EINHEIT FÜR EINEN BRENNSTOFFZELLENSTAPEL**
ELECTROCHEMICAL UNIT FOR FUEL CELL STACK
UNITÉ ÉLECTROCHIMIQUE POUR EMPILEMENT DE CELLULES ÉLÉMENTAIRES

(30) Priorität: 20.01.2015 DE 102015100740
(43) Veröffentlichungstag der Anmeldung: 29.11.2017
(73) Patentinhaber: ElringKlinger AG, 72581 Dettingen (DE)
(72) Erfinder: STAHL, Peter, 72555 Metzingen (DE); KRAFT, Jürgen, 72555 Metzingen (DE); GÖTZ, Michael, 72581 Dettingen (DE)
(74) Vertreter: Hoeger, Stellrecht & Partner Patentanwälte mbB
(86) Internationale Anmeldenummer: PCT/EP2016/051003
(87) Internationale Veröffentlichungsnummer: WO 2016/116441

(56) Entgegenhaltungen:
- EP-A1- 2 790 255
- JP-A- 2007 066 766
- JP-A- 2007 214 101

## Beschreibung

Die vorliegende Erfindung betrifft eine elektrochemische Einheit für einen Brennstoffzellenstapel, in dem mehrere Brennstoffzelleneinheiten mit jeweils einer elektrochemischen Einheit längs einer Stapelrichtung aufeinander folgen, wobei die elektrochemische Einheit eine Membran-Elektroden-Einheit umfasst, die eine anodenseitige elektrochemisch aktive Fläche aufweist, durch welche der Anode der Membran-Elektroden-Einheit ein Brenngas zuführbar ist und welche einen äußeren Rand aufweist, der durch ein anodenseitiges Berandungselement definiert ist, und eine kathodenseitige elektrochemisch aktive Fläche aufweist, durch welche der Kathode der Membran-Elektroden-Einheit ein Oxidationsmittel zuführbar ist und welche einen äußeren Rand aufweist, der durch ein kathodenseitiges Berandungselement definiert ist.

In Brennstoffzellenstapeln, in denen eine Vielzahl von Brennstoffzelleneinheiten in der Stapelrichtung übereinander angeordnet sind, werden in verschiedenen Ebenen einer Brennstoffzelleneinheit und, je nach Design, auch in verschiedenen Bereichen derselben Ebene unterschiedliche Medien geführt. Diese Medien können insbesondere das anodenseitige Fluid (Brenngas), das kathodenseitige Fluid (Oxidationsmittel) und gegebenenfalls auch ein Kühlfluid sein.

Diese durch den Brennstoffzellenstapel geführten Medien dürfen sich weder miteinander vermischen noch aus den elektrochemischen Zellen austreten, weshalb in mehreren Ebenen Dichtungen erforderlich sind.

Einander benachbarte elektrochemische Einheiten sind durch jeweils eine Separatorplatte oder Bipolarplatte voneinander abgetrennt.

Eine Dichtung kann als separate Komponente in den Brennstoffzellenstapel eingelegt oder auf einer Bipolarplatte oder auf einem Bestandteil einer elektrochemischen Einheit für eine Brennstoffzelleneinheit, beispielsweise auf einer Gasdiffusionslage oder auf einer Membran-Elektroden-Einheit, festgelegt sein.

Wegen Vorteilen in der Handhabung und in der Herstellung und wegen der einfachen Dichtungsausführung wird häufig die Festlegung der Dichtung an einer Bipolarplatte oder an einer Gasdiffusionslage bevorzugt. Dies kann beispielsweise durch Anspritzen einer Dichtung, insbesondere aus einem Elastomermaterial, an eine Lage der Bipolarplatte beziehungsweise an eine Gasdiffusionslage erfolgen.

In dieser Dichtungskonfiguration hat sich die Kombination der an der Bipolarplatte oder an der Gasdiffusionslage festgelegten Dichtung mit einer im Randbereich der Membran-Elektroden-Einheit an der Membran-Elektroden-Einheit (insbesondere an einer katalysatorbeschichteten Membran, CCM) festgelegten Randverstärkungsanordnung erwiesen, wobei die Randverstärkungsanordnung als Gegenkomponente für die Dichtung dient, eine nachteilige mechanische Belastung der Membran-Elektroden-Einheit verhindern hilft und zugleich eine vorteilhafte Anbindung des elektrochemisch aktiven Bereiches der Membran-Elektroden-Einheit an den Randbereich der Membran-Elektroden-Einheit sicherstellt.

Eine solche Randverstärkungsanordnung ist beispielsweise in der EP 1 403 949 B1 offenbart.

Eine solche Randverstärkungsanordnung wird auch als Sub-Gasket bezeichnet.

Eine solche Randverstärkungsanordnung kann eine oder mehrere Lagen umfassen, wobei ein üblicher Aufbau zwei Lagen umfasst, die auf zwei einander gegenüberliegenden Seiten der Membran-Elektroden-Einheit in Form eines umlaufenden Rahmens angeordnet sind.

Bei der Herstellung des Brennstoffzellenstapels müssen die Bipolarplatte, die Gasdiffusionslagen, die Membran-Elektroden-Einheit, die Dichtungen und gegebenenfalls eine Randverstärkungsanordnung (Sub-Gasket) jeder Brennstoffzelleneinheit relativ zueinander positioniert werden, wobei diese Komponenten einzeln oder als zumindest teilweise bereits miteinander verbundene Unterbaugruppen assembliert werden können.

Bei Verwendung einer Randverstärkungsanordnung muss eine Randverstärkungslage der Randverstärkungsanordnung relativ zu der Membran-Elektroden-Einheit positioniert werden. Bei einer zweiteiligen Randverstärkungsanordnung muss auch eine zweite Randverstärkungslage der Randverstärkungsanordnung relativ zu der Membran-Elektroden-Einheit und/oder relativ zu der ersten Randverstärkungslage der Randverstärkungsanordnung positioniert werden.

Zwei Gasdiffusionslagen müssen jeweils relativ zu der Einheit aus Membran-Elektroden-Einheit und der Randverstärkungsanordnung positioniert werden.

Die Einheit aus Membran-Elektroden-Einheit und Randverstärkungsanordnung muss dann relativ zu der Bipolarplatte und der Dichtung positioniert werden, wobei die Dichtung auf der Bipolarplatte und/oder auf der Randverstärkungsanordnung appliziert sein kann.

Die elektrochemisch aktiven Bereiche auf - in der Stapelrichtung gesehen - beiden einander gegenüberliegenden Seiten (Hauptflächen) der Membran-Elektroden-Einheit (angrenzend an die anodenseitige beziehungsweise die kathodenseitige Katalysatorschicht), in denen eine elektrochemische Reaktion stattfinden kann, werden je nach Art des Aufbaus durch eine Randverstärkungsanordnung begrenzt oder durch Dichtelemente begrenzt, die jeweils in direktem Kontakt zur Membran-Elektroden-Einheit stehen und dadurch eine Gasströmung zur Membran-Elektroden-Einheit hin an der Anode beziehungsweise an der Kathode unterbinden.

Bei bekannten Brennstoffzelleneinheiten sind die elektrochemisch aktiven Flächen auf beiden Seiten der Membran-Elektroden-Einheit, welche durch Größe und/oder Lage einer Randverstärkungsanordnung oder von Dichtungen definiert sind, nominal jeweils gleich groß und - in der Stapelrichtung gesehen - deckungsgleich ausgeführt.

Aufgrund von Fertigungstoleranzen der Einzelkomponenten und von Positioniertoleranzen in der Assemblierung von Einzelkomponenten und Unterbaugruppen können die durch Dichtungen oder Randverstärkungslagen einer Randverstärkungsanordnung definierten elektrochemisch aktiven Bereiche auf den beiden Seiten der Membran-Elektroden-Einheit stellenweise (in einer senkrecht zur Stapelrichtung ausgerichteten Richtung) versetzt zueinander angeordnet sein. Lokal können so im Randbereich der Membran-Elektroden-Einheit Abschnitte entstehen, in denen die Membran-Elektroden-Einheit nur einseitig durch eine Randverstärkungsanordnung oder eine Dichtung abgedeckt ist und in denen der elektrochemisch aktive Bereich der Membran-Elektroden-Einheit von der jeweils anderen Seite (Anode oder Kathode) aus mit Reaktionsgas versorgt wird. Wenn nun ein Bereich der Membran-Elektroden-Einheit nur mit Oxidationsmittel versorgt wird, so kann die fehlende Versorgung der Membran-Elektroden-Einheit mit Brenngas (in der Regel ein wasserstoffhaltiges Gas) in diesem lokal begrenzten Bereich zu verstärkten Alterungseffekten führen. Die hierbei ablaufenden Mechanismen werden in der Literatur ausführlich behandelt, vor allem in Bezug auf die Blockierung der Gaswege durch die partielle Flutung der Brennstoffzelle mit Wasser, beispielsweise in Electrochemical and Solid-State Letters 9 (4) (2006), Seiten A183 bis A185; in ECS Transactions 3 (1) (2006), Seiten 811 bis 825; und in International Journal of Heat and Mass Transfer 55 (2012), Seiten 4745 bis 4765.

Insbesondere sinkt durch die bereichsweise ungenügende Versorgung mit Brenngas und die damit verbundene verminderte Oxidation von Wasserstoff an der Anode das Membran(elektrolyt)-Potential im unterversorgten Bereich ab. Die Elektrodenpotentiale an der Anode und an der Kathode steigen signifikant an, wodurch eine elektrochemische oder chemische Schädigung von Komponenten der Membran-Elektroden-Einheit eintreten kann.

Die in den Randbereichen der anodenseitigen und der kathodenseitigen elektrochemisch aktiven Flächen durch den relativen Versatz von Dichtungen oder Randverstärkungsanordnungs-Einzellagen hervorgerufene lokale Blockade der Gaswege auf der Anodenseite der Membran-Elektroden-Einheit kann somit in diesem lokal begrenzten Bereich eine beschleunigende Wirkung auf die Alterung der Katalysatorschichten und der Membran der Membran-Elektroden-Einheit haben. Schon ein Versatz von wenigen Zehntel Millimetern kann bei hohen Betriebsdauern von Brennstoffzellen zu einer starken Alterung führen.

Die JP 2007 066766 A, die EP 2 790 255 A1 und die JP 2007 214101 A offenbaren elektrochemische Einheiten gemäß dem Oberbegriff von Anspruch 1.

Der vorliegenden Erfindung liegt die Aufgabe zugrunde, eine elektrochemische Einheit für einen Brennstoffzellenstapel der eingangs genannten Art zu schaffen, bei welcher eine verstärkte Alterung der Membran-Elektroden-Einheit durch eine Versorgung von Bereichen der Membran-Elektroden-Einheit nur mit Oxidationsmittel vermieden wird.

Diese Aufgabe wird durch eine elektrochemische Einheit nach Anspruch 1 gelöst.

Der vorliegenden Erfindung liegt das Konzept zugrunde, die elektrochemische Einheit bewusst so zu gestalten, dass der mit Brenngas versorgte anodenseitige elektrochemisch aktive Bereich der Membran-Elektroden-Einheit zumindest abschnittsweise seitlich über den mit Oxidationsmittel versorgten kathodenseitigen elektrochemisch aktiven Bereich der Membran-Elektroden-Einheit übersteht. Hierdurch wird vermieden, dass aufgrund von Fertigungstoleranzen der Einzelkomponenten und/oder von Positioniertoleranzen in der Assemblierung von Einzelkomponenten und Unterbaugruppen ein Bereich der Membran-Elektroden-Einheit erzeugt wird, der kathodenseitig mit Oxidationsmittel, aber nicht auch anodenseitig mit Brenngas versorgt wird.

Vielmehr wird bewusst in Kauf genommen, dass durch die zumindest lokale Vergrößerung der anodenseitigen elektrochemisch aktiven Fläche der Membran-Elektroden-Einheit im Vergleich zu der kathodenseitigen elektrochemisch aktiven Fläche der Membran-Elektroden-Einheit an der Membran-Elektroden-Einheit Bereiche entstehen, welche anodenseitig mit Brenngas versorgt werden, aber nicht auch kathodenseitig mit Oxidationsmittel.

Diesem Konzept liegt die Erkenntnis zugrunde, dass eine nur einseitige Versorgung der Membran-Elektroden-Einheit mit Brenngas für die Membran-Elektroden-Einheit keine Quelle verstärkter Alterungsmechanismen darstellt und in Bezug auf die Dauerhaltbarkeit der Membran-Elektroden-Einheit dem umgekehrten Fall, also der einseitigen Versorgung der Membran-Elektroden-Einheit mit Oxidationsmittel, vorzuziehen ist.

Die anodenseitigen und kathodenseitigen Berandungselemente der elektrochemisch aktiven Flächen, welche die elektrochemisch aktiven Flächen der Membran-Elektroden-Einheit in einer senkrecht zur Stapelrichtung verlaufenden Ebene nach außen hin begrenzen, sind dabei vorzugsweise so ausgeführt, dass die mit Brenngas versorgte anodenseitige elektrochemisch aktive Fläche im Bereich des Versatzes über die mit Oxidationsmittel versorgte kathodenseitige elektrochemisch aktive Fläche seitlich übersteht und der äußere Rand der mit Brenngas versorgten anodenseitigen elektrochemisch aktiven Fläche relativ zum äußeren Rand der mit Oxidationsmittel versorgten kathodenseitigen elektrochemisch aktiven Fläche in einer senkrecht zur Stapelrichtung verlaufenden Ebene zumindest abschnittsweise versetzt angeordnet ist.

Besonders günstig ist es, wenn der äußere Rand der anodenseitigen elektrochemisch aktiven Fläche über mindestens zwei Drittel seiner gesamten Länge, insbesondere über mindestens 90 % seiner gesamten Länge, besonders bevorzugt über im Wesentlichen seine gesamte Länge hinweg, gegenüber dem äußeren Rand der kathodenseitigen elektrochemisch aktiven Fläche in einer zur Stapelrichtung senkrecht verlaufenden Richtung nach außen versetzt ist.

Neben den Bereichen der Membran-Elektroden-Einheit, in denen eine beidseitige Versorgung mit Reaktionsgasen, also mit Oxidationsmittel und Brenngas, sichergestellt ist, entstehen so Bereiche, in denen nur eine einseitige Versorgung mit Brenngas stattfindet, und zwar vorzugsweise an einem umlaufenden Rand der Membran-Elektroden-Einheit. Eine lokale Versorgung nur mit Brenngas stellt aber für die Membran-Elektroden-Einheit keine Quelle verstärkter Alterungsmechanismen dar.

Die Komponenten, welche die anodenseitige elektrochemisch aktive Fläche und die kathodenseitige elektrochemisch aktive Fläche der Membran-Elektroden-Einheit senkrecht zur Stapelrichtung begrenzen, insbesondere Dichtungselemente und/oder Randverstärkungsanordnungen, werden derart ausgeführt, dass selbst bei Ausnutzung der Fertigungstoleranzen und Assembliertoleranzen der Komponenten der elektrochemischen Einheit in keinem Bereich der Membran-Elektroden-Einheit die kathodenseitige elektrochemisch aktive Fläche größer ist als die anodenseitige elektrochemisch aktive Fläche.

Vorzugsweise beträgt die Sollgröße für den Versatz V, um den der äußere Rand der anodenseitigen elektrochemisch aktiven Fläche gegenüber dem äußeren Rand der kathodenseitigen elektrochemisch aktiven Fläche nach außen versetzt ist, zumindest abschnittsweise, insbesondere über mindestens 90 % der gesamten Länge dieser Ränder, besonders bevorzugt über die gesamte Länge dieser Ränder hinweg, mindestens ungefähr 0,1 mm, insbesondere mindestens ungefähr 0,2 mm.

Um den nur mit Brenngas versorgten Bereich der Membran-Elektroden-Einheit, an dem keine elektrochemische Reaktion stattfindet, nicht zu groß werden zu lassen, ist es günstig, wenn die Sollgröße für den Versatz V, um den der äußere Rand der anodenseitigen elektrochemisch aktiven Fläche gegenüber dem äußeren Rand der kathodenseitigen elektrochemisch aktiven Fläche nach außen versetzt ist, zumindest abschnittsweise, vorzugsweise über mindestens 90 % der gesamten Länge dieser Ränder, insbesondere über die gesamte Länge dieser Ränder hinweg, höchstens ungefähr 0,6 mm, insbesondere höchstens ungefähr 0,4 mm, beträgt.

Besonders günstig ist es, wenn der äußere Rand der anodenseitigen elektrochemisch aktiven Fläche an keiner Stelle gegenüber dem äußeren Rand der kathodenseitigen elektrochemisch aktiven Fläche in einer zur Stapelrichtung senkrechten Richtung nach innen versetzt ist.

Bei der Erfindung ist vorgesehen, dass das anodenseitige Berandungselement und/oder das kathodenseitige Berandungselement mindestens ein Dichtungselement umfasst.

Ein solches Dichtungselement ist an einer jeweils zugeordneten Gasdiffusionslage festgelegt.

Mindestens ein Dichtungselement kann mindestens einen Anbindungsbereich, welcher die anodenseitige oder die kathodenseitige elektrochemisch aktive Fläche berandet, und einen Dichtungsbereich, welcher mindestens eine, vorzugsweise zwei oder mehr, Dichtlippen aufweist, umfassen.

Dabei ist vorzugsweise vorgesehen, dass die Verpresskraft, mit welcher der Anbindungsbereich bei der Montage des Brennstoffzellenstapels verpresst wird, weniger als 50 %, insbesondere weniger als 30 %, der Verpresskraft beträgt, mit welcher das gesamte Dichtungselement bei der Montage des Brennstoffzellenstapels verpresst wird.

Wenn die elektrochemische Einheit ein anodenseitiges Dichtungselement und ein kathodenseitiges Dichtungselement umfasst, so sind vorzugsweise mindestens eine Dichtlippe des anodenseitigen Dichtungselements und mindestens eine Dichtlippe des kathodenseitigen Dichtungselements in der Stapelrichtung zumindest teilweise übereinander angeordnet.

Bei einer Projektion längs der Stapelrichtung überlappen sich mindestens eine Dichtlippe des anodenseitigen Dichtungselements und mindestens eine Dichtlippe des kathodenseitigen Dichtungselements zumindest teilweise, vorzugsweise im Wesentlichen vollständig.

Alternativ oder ergänzend hierzu kann vorgesehen sein, dass das anodenseitige Berandungselement und/oder das kathodenseitige Berandungselement mindestens eine Randverstärkungslage, beispielsweise in Form einer Randverstärkungsfolie, umfasst.

Besonders bevorzugt ist es, wenn sowohl das anodenseitige Berandungselement als auch das kathodenseitige Berandungselement jeweils eine Randverstärkungslage umfassen, wobei die Randverstärkungslagen auf aneinander gegenüberliegenden Seiten der Membran-Elektroden-Einheit angeordnet sind.

Es kann vorgesehen sein, dass das anodenseitige Berandungselement und/oder das kathodenseitige Berandungselement mindestens ein Dichtungselement aus einem Elastomermaterial oder eine Randverstärkungsfolie umfasst, wobei das Dichtungselement oder die Randverstärkungsfolie die anodenseitige elektrochemisch aktive Fläche oder die kathodenseitige elektrochemisch aktive Fläche berandet.

Das anodenseitige Berandungselement und/oder das kathodenseitige Berandungselement können jeweils an einer Gasdiffusionslage der elektrochemischen Einheit festgelegt sein, insbesondere dann, wenn es sich bei einem solchen Berandungselement um ein Dichtungselement, vorzugsweise aus einem Elastomermaterial, handelt.

Alternativ oder ergänzend hierzu kann vorgesehen sein, dass mindestens ein anodenseitiges Berandungselement und/oder mindestens ein kathodenseitiges Berandungselement an einer Bipolarplatte festgelegt ist und im montierten Zustand des Brennstoffzellenstapels an der Membran-Elektroden-Einheit anliegt.

Alternativ oder ergänzend hierzu kann vorgesehen sein, dass mindestens ein anodenseitiges Berandungselement und/oder mindestens ein kathodenseitiges Berandungselement an der Membran-Elektroden-Einheit festgelegt ist.

Da bei der erfindungsgemäßen elektrochemischen Einheit der äußere Rand der anodenseitigen elektrochemisch aktiven Fläche der Membran-Elektroden-Einheit gegenüber dem äußeren Rand der kathodenseitigen elektrochemisch aktiven Fläche der Membran-Elektroden-Einheit nach außen versetzt ist, kann auch vorgesehen sein, dass eine anodenseitige Gasdiffusionslage der elektrochemischen Einheit einen äußeren Rand aufweist, der zumindest abschnittsweise gegenüber dem äußeren Rand einer kathodenseitigen Gasdiffusionslage der elektrochemischen Einheit in einer senkrecht zur Stapelrichtung verlaufenden Richtung nach außen versetzt ist.

Vorzugsweise ist dabei vorgesehen, dass der äußere Rand der anodenseitigen Gasdiffusionslage zumindest abschnittsweise, insbesondere über mindestens 90 % seiner Länge, besonders bevorzugt über seine gesamte Länge hinweg, gegenüber dem äußeren Rand der kathodenseitigen Gasdiffusionslage in einer senkrecht zur Stapelrichtung verlaufenden Richtung nach außen versetzt ist.

Alternativ hierzu kann aber auch vorgesehen sein, dass die anodenseitige Gasdiffusionslage und die kathodenseitige Gasdiffusionslage im Wesentlichen deckungsgleich miteinander ausgebildet sind und deren äußere Ränder in der Stapelrichtung gesehen im Wesentlichen übereinander liegen.

Bei einer bevorzugten Ausgestaltung der erfindungsgemäßen elektrochemischen Einheit ist vorgesehen, dass die anodenseitige elektrochemisch aktive Fläche der Membran-Elektroden-Einheit größer ist als die kathodenseitige elektrochemisch aktive Fläche der Membran-Elektroden-Einheit.

Insbesondere wird dabei die elektrochemische Einheit bewusst so gestaltet, dass der mit Brenngas versorgte anodenseitige elektrochemisch aktive Bereich der Membran-Elektroden-Einheit eine größere Sollgröße aufweist als der mit Oxidationsmittel versorgte kathodenseitige elektrochemisch aktive Bereich der Membran-Elektroden-Einheit.

Die erfindungsgemäße elektrochemische Einheit eignet sich insbesondere zur Verwendung in einem Brennstoffzellenstapel, welcher mehrere erfindungsgemäße elektrochemische Einheiten umfasst, die in der Stapelrichtung aufeinander folgen.

Die Membran-Elektroden-Einheit der erfindungsgemäßen elektrochemischen Einheit umfasst vorzugsweise eine Polymerelektrolyt-Membran.

Der Versatz der äußeren Ränder der anodenseitigen elektrochemisch aktiven Fläche und der kathodenseitigen elektrochemisch aktiven Fläche zueinander ist vorzugsweise mindestens so groß wie die Summe der Fertigungstoleranzen der Einzelkomponenten und der Assembliertoleranzen der Einzelkomponenten zueinander, so dass auch bei Berücksichtigung der Fertigungstoleranzen und der Assembliertoleranzen an der Membran-Elektroden-Einheit kein Bereich entsteht, in dem die kathodenseitige elektrochemisch aktive Fläche über die anodenseitige elektrochemisch aktive Fläche hinaus ragt.

Die Berandungselemente, welche die anodenseitige elektrochemisch aktive Fläche beziehungsweise die kathodenseitige elektrochemisch aktive Fläche der Membran-Elektroden-Einheit definieren und vorzugsweise in direktem Kontakt mit der Membran-Elektroden-Einheit stehen, können insbesondere Dichtungselemente, Randverstärkungslagen und/oder mechanische Stützelemente sein.

Wenn eine Randverstärkungsanordnung nur eine (vorzugsweise kathodenseitige) Randverstärkungslage umfasst, welche als Berandungselement eine der elektrochemisch aktiven Flächen der Membran-Elektroden-Einheit definiert (vorzugsweise die kathodenseitige elektrochemisch aktive Fläche), so wird der äußere Rand der jeweils anderen elektrochemisch aktiven Fläche der Membran-Elektroden-Einheit (also vorzugsweise der anodenseitigen elektrochemisch aktiven Fläche) vorzugsweise durch den äußeren Rand der Membran-Elektroden-Einheit selbst gebildet.

Weitere Merkmale und Vorteile der Erfindung sind Gegenstand der nachfolgenden Beschreibung und der zeichnerischen Darstellung von Ausführungsbeispielen.

In den Zeichnungen zeigen:

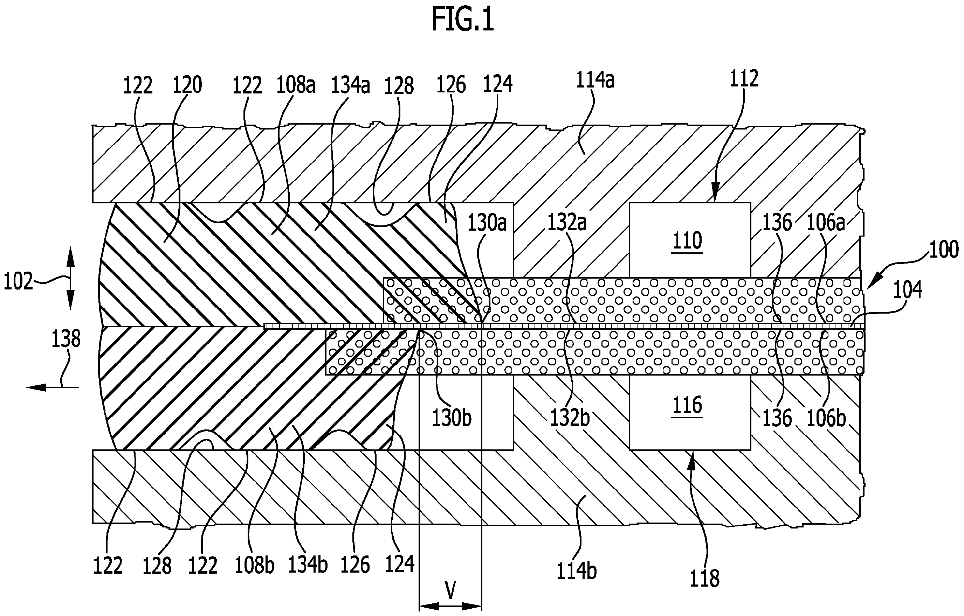

- Fig. 1: einen ausschnittsweisen Längsschnitt durch eine elektrochemische Einheit für einen Brennstoffzellenstapel, in dem mehrere Brennstoffzelleneinheiten mit jeweils einer elektrochemischen Einheit längs einer Stapelrichtung aufeinander folgen, und zwei an die elektrochemische Einheit angrenzende Bipolarplatten, wobei die elektrochemische Einheit eine Membran-Elektroden-Einheit umfasst, deren elektrochemisch aktive Flächen auf der Anodenseite und auf der Kathodenseite durch jeweils ein Dichtungselement berandet sind, welches an einer Gasdiffusionslage festgelegt ist;

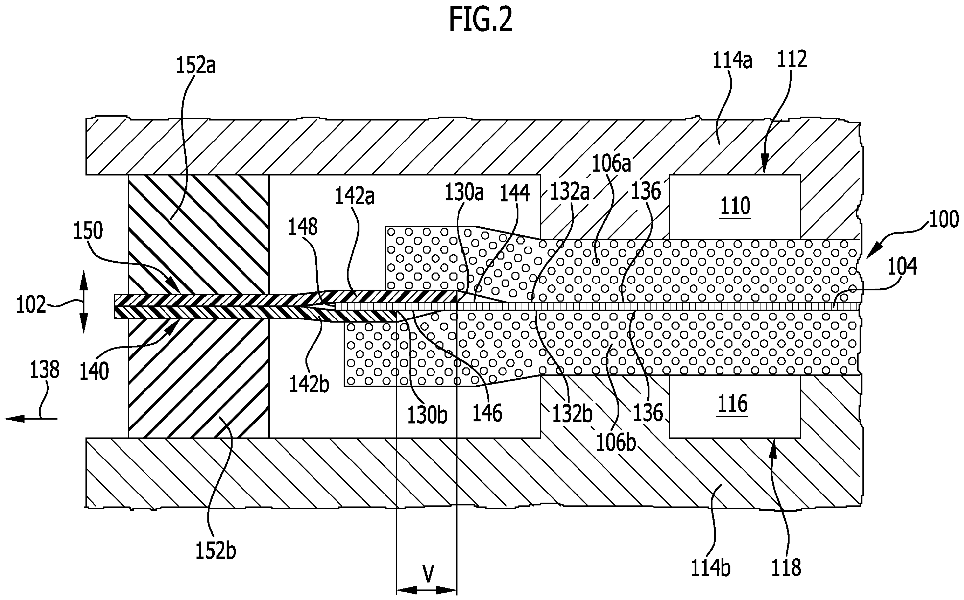

- Fig. 2: einen ausschnittsweisen Längsschnitt durch eine zweite Ausführungsform einer elektrochemischen Einheit für einen Brennstoffzellenstapel, bei welcher die elektrochemisch aktiven Flächen der Membran-Elektroden-Einheit auf der Kathodenseite und auf der Anodenseite durch jeweils eine an der Membran-Elektroden-Einheit festgelegte Randverstärkungsfolie berandet sind;

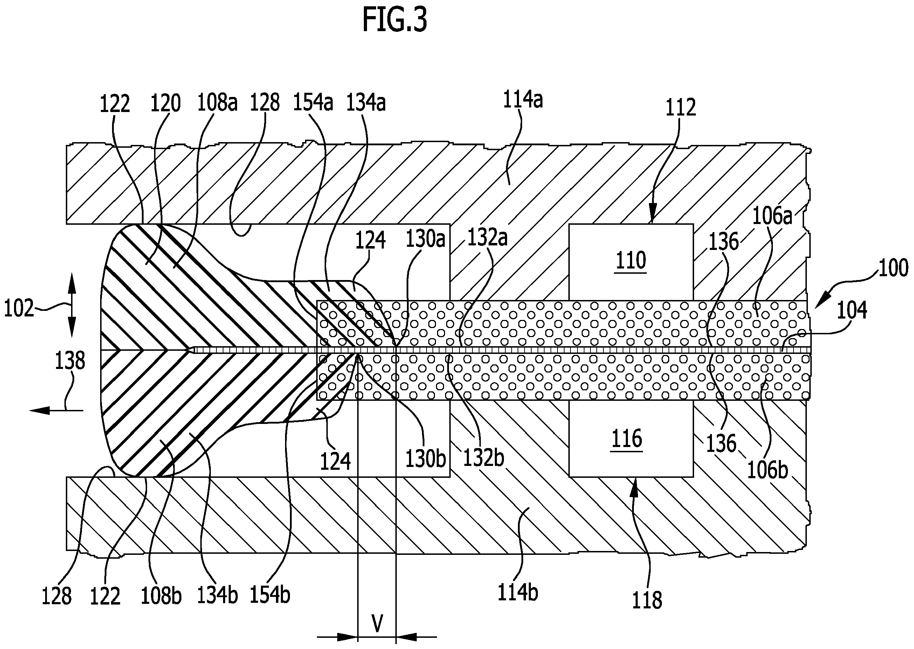

- Fig. 3: einen ausschnittsweisen Längsschnitt durch eine dritte Ausführungsform einer elektrochemischen Einheit für einen Brennstoffzellenstapel, bei welcher die elektrochemisch aktiven Flächen der Membran-Elektroden-Einheit auf der Anodenseite und auf der Kathodenseite durch jeweils ein Dichtungselement berandet sind, welches an einer Gasdiffusionslage festgelegt ist, wobei Anbindungsbereiche der Dichtungselemente nicht durch Dichtlippen abgestützt sind und die anodenseitige Gasdiffusionslage und die kathodenseitige Gasdiffusionslage im Wesentlichen vorzugsweise deckungsgleich ausgebildet sind; und

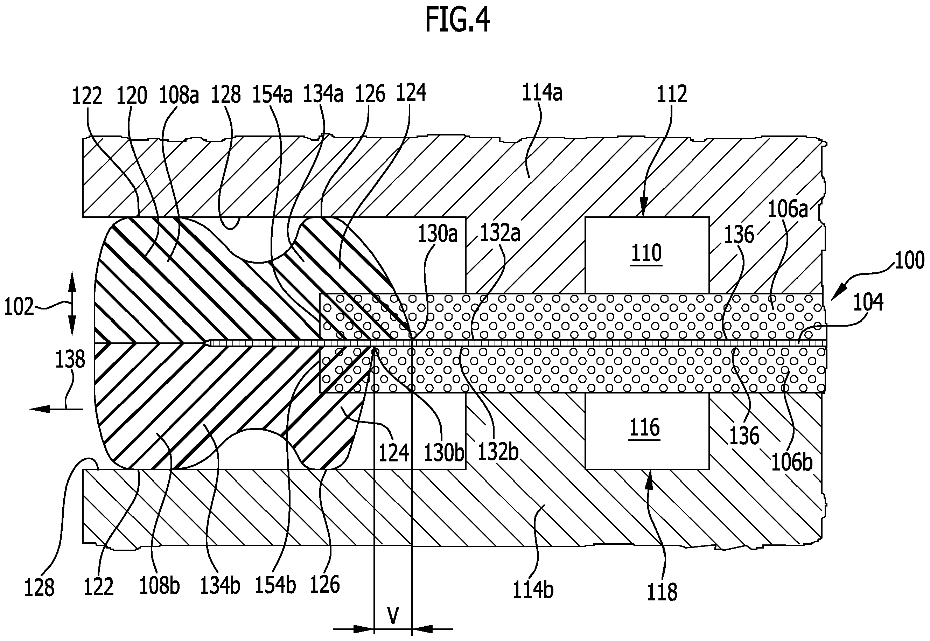

- Fig. 4: einen ausschnittsweisen Längsschnitt durch eine vierte Ausführungsform einer elektrochemischen Einheit für einen Brennstoffzellenstapel, bei welcher die elektrochemisch aktiven Flächen auf der Anodenseite und auf der Kathodenseite durch jeweils ein Dichtungselement berandet sind, wobei Anbindungsbereiche der Dichtungselemente durch jeweils eine Dichtlippe an der jeweils zugeordneten Bipolarplatte abgestützt sind und die anodenseitige Gasdiffusionslage und die kathodenseitige Gasdiffusionslage vorzugsweise im Wesentlichen deckungsgleich ausgebildet sind.

Gleiche oder funktional äquivalente Elemente sind in allen Figuren mit denselben Bezugszeichen bezeichnet.

Eine in Fig. 1 ausschnittsweise dargestellte, als Ganzes mit 100 bezeichnete elektrochemische Einheit für einen Brennstoffzellenstapel, in dem mehrere Brennstoffzelleneinheiten mit jeweils einer elektrochemischen Einheit 100 längs einer Stapelrichtung 102 aufeinander folgen, umfasst eine Membran-Elektroden-Einheit 104, eine kathodenseitige Gasdiffusionslage 106a, ein an der kathodenseitigen Gasdiffusionslage 106a festgelegtes kathodenseitiges Dichtungselement 108a, eine anodenseitige Gasdiffusionslage 106b und ein an der anodenseitigen Gasdiffusionslage 106b festgelegtes anodenseitiges Dichtungselement 108b.

Die Membran-Elektroden-Einheit 104 umfasst eine der kathodenseitigen Gasdiffusionslage 106a zugewandte Kathode, eine der anodenseitigen Gasdiffusionslage 106b zugewandte Anode und eine zwischen der Kathode und der Anode angeordnete Elektrolytmembran, insbesondere eine Polymerelektrolyt-membran.

Dieser dreilagige Aufbau der Membran-Elektroden-Einheit 104 ist in den Zeichnungen nicht dargestellt.

Die kathodenseitige Gasdiffusionslage 106a ist aus einem gasdurchlässigen Material gebildet und dient dem Durchtritt eines Oxidationsmittels aus den Kanälen 110 eines kathodenseitigen Strömungsfelds 112 einer Bipolarplatte 114a, welche in der Stapelrichtung 102 auf die elektrochemische Einheit 100 folgt und mit der kathodenseitigen Gasdiffusionslage 106a in Kontakt steht, zu der Kathode der Membran-Elektroden-Einheit 104.

Die anodenseitige Gasdiffusionslage 106b ist ebenfalls aus einem gasdurchlässigen Material gebildet und dient dem Durchtritt eines Brenngases aus den Kanälen 116 eines anodenseitigen Strömungsfelds 118 einer in der Stapelrichtung 102 unter der elektrochemischen Einheit 100 angeordneten Bipolarplatte 114b, welche mit der anodenseitigen Gasdiffusionslage 106b in Kontakt steht, zu der Anode der Membran-Elektroden-Einheit 104.

Die Dichtungselemente 108a, 108b sind beispielsweise aus einem Elastomermaterial gebildet.

Die Dichtungselemente 108a, 108b können insbesondere durch ein Spritzgießverfahren hergestellt und vorzugsweise an die kathodenseitige Gasdiffusionslage 106a beziehungsweise an die anodenseitige Gasdiffusionslage 106b angebunden sein, wobei erfindungsgemäß ein Teil der jeweils zugeordneten Gasdiffusionslage 106a, 106b vom Dichtungsmaterial infiltriert wird.

In dem hier dargestellten Ausführungsbeispiel umfasst jedes Dichtungselement 108a, 108b jeweils einen Dichtungsbereich 120 mit einer oder mehreren Dichtlippen 122 sowie einen Anbindungsbereich 124, welcher vorzugsweise eine Dichtlippe 126 aufweist.

Im montierten Zustand des Brennstoffzellenstapels liegen die Dichtlippen 122 der Dichtungsbereiche 120 und die Dichtlippen 126 der Anbindungsbereiche 124 der Dichtungselemente 108 jeweils an einer Dichtfläche 128 der jeweils zugeordneten Bipolarplatte 114a beziehungsweise 114b unter einer elastischen Verpresskraft an.

Dabei beträgt vorzugsweise die Verpresskraft, mit welcher der Anbindungsbereich 124 eines Dichtungselements 108a, 108b bei der Montage des Brennstoffzellenstapels verpresst wird, weniger als 50 %, insbesondere weniger als 30 %, der Verpresskraft, mit welcher das gesamte Dichtungselement 108a beziehungsweise 108b bei der Montage des Brennstoffzellenstapels verpresst wird.

Der Anbindungsbereich 124 jedes Dichtungselements 108a, 108b erstreckt sich durch die jeweils zugeordnete Gasdiffusionslage 106a beziehungsweise 106b hindurch bis zu der Membran-Elektroden-Einheit 104, wo ein Rand des Dichtungselements 108a, 108b zugleich einen äußeren Rand 130a der kathodenseitigen elektrochemisch aktiven Fläche 132a der Membran-Elektroden-Einheit 104 beziehungsweise einen äußeren Rand 130b der anodenseitigen elektrochemisch aktiven Fläche 132b der Membran-Elektroden-Einheit 104 bildet.

Die kathodenseitige elektrochemisch aktive Fläche 132a der Membran-Elektroden-Einheit 104 ist die Fläche der Membran-Elektroden-Einheit 104, durch welche der Kathode der Membran-Elektroden-Einheit 104 im Betrieb des Brennstoffzellenstapels ein Oxidationsmittel aus dem kathodenseitigen Strömungsfeld 112 zuführbar ist.

Diese Fläche wird durch das kathodenseitige Dichtungselement 108a berandet, welches somit bei dieser Ausführungsform als kathodenseitiges Berandungselement 134a dient.

Die anodenseitige elektrochemisch aktive Fläche 132b der Membran-Elektroden-Einheit 104 ist die Fläche der Membran-Elektroden-Einheit 104, durch welche der Anode der Membran-Elektroden-Einheit 104 im Betrieb des Brennstoffzellenstapels ein Brenngas aus dem anodenseitigen Strömungsfeld 118 zuführbar ist.

Diese Fläche wird durch das anodenseitige Dichtungselement 108b berandet, so dass das anodenseitige Dichtungselement 108b bei dieser Ausführungsform als anodenseitiges Berandungselement 134b dient.

Die Dichtungselemente 108a, 108b stehen jeweils in direktem Kontakt mit der Membran-Elektroden-Einheit 104 und definieren die Ausdehnung der elektrochemisch aktiven Flächen 132a und 132b auf der Kathodenseite beziehungsweise auf der Anodenseite der Membran-Elektroden-Einheit 104.

Wie aus Fig. 1 zu ersehen ist, ist dabei der äußere Rand 130b der anodenseitigen elektrochemisch aktiven Fläche 132b gegenüber dem äußeren Rand 130a der kathodenseitigen elektrochemisch aktiven Fläche 132a in einer senkrecht zur Stapelrichtung 102 und parallel zu den Hauptflächen 136 der Membran-Elektroden-Einheit 104 verlaufenden Richtung 138 nach außen, das heißt vom Zentrum der elektrochemisch aktiven Flächen 132a, 132b weg, um einen Versatz V versetzt.

Hierdurch ist vorzugsweise die anodenseitige elektrochemisch aktive Fläche 132b der Membran-Elektroden-Einheit 104 größer als die kathodenseitige elektrochemisch aktive Fläche 132a der Membran-Elektroden-Einheit 104.

Im äußeren Randbereich der Membran-Elektroden-Einheit 104 entsteht somit ein Bereich, in dem die Membran-Elektroden-Einheit 104 nur von der Anodenseite her mit einem Reaktionsgas versorgt wird, nicht aber von der Kathodenseite her.

Hierdurch wird erreicht, dass alle elektrochemisch aktiven Bereiche der Membran-Elektroden-Einheit 104 im Betrieb des Brennstoffzellenstapels mit Brenngas (in der Regel ein wasserstoffhaltiges Gas) versorgt werden, so dass ein verstärkter Alterungseffekt aufgrund von fehlender Versorgung eines Bereichs der Membran-Elektroden-Einheit 104 mit Brenngas vermieden wird.

Der Nennversatz oder Sollversatz der äußeren Ränder 130a und 130b zueinander ist vorzugsweise etwas größer als die Fertigungstoleranzen und Assembliertoleranzen der Einzelkomponenten der elektrochemischen Einheit 100, so dass auch bei Ausnutzung dieser Toleranzen die anodenseitige elektrochemisch aktive Fläche 132b immer größer als die kathodenseitige elektrochemisch aktive Fläche 132a ist.

Vorzugsweise ist vorgesehen, dass der Versatz V zwischen den äußeren Rändern 130a und 130b mindestens ungefähr 0,1 mm, insbesondere mindestens ungefähr 0,2 mm, beträgt.

Damit der nur mit Brenngas versorgte Bereich der Membran-Elektroden-Einheit 104, an dem keine elektrochemische Reaktion stattfindet, nicht zu groß wird, ist es ferner günstig, wenn der Versatz V höchstens ungefähr 0,6 mm, insbesondere höchstens ungefähr 0,4 mm, beträgt.

Die Dichtungselemente 108a und 108b sind so strukturiert, dass zum Aufbau des für eine ausreichende Dichtwirkung erforderlichen Verpressdruckes eine möglichst geringe Gesamtverpresskraft erforderlich ist.

Die Dichtungselemente 108a und 108b zu den beiden Seiten der Membran-Elektroden-Einheit 104 sind vorzugsweise im Wesentlichen deckungsgleich miteinander ausgebildet, so dass die Krafteinleitungslinien der Dichtungselemente 108a, 108b auf der Anodenseite und auf der Kathodenseite in der Stapelrichtung 102 im Wesentlichen übereinander liegen.

Insbesondere ist vorzugsweise vorgesehen, dass die Dichtflächen der Dichtlippen 122 der Dichtungsbereiche 120 der Dichtungselemente 108a und 108b bei Projektion längs der Stapelrichtung 102 einander zumindest teilweise, vorzugsweise im Wesentlichen vollständig, überlappen.

Die Dichtlippen 126 der Anbindungsbereiche 124 der Dichtungselemente 108a und 108b können in einer zur Stapelrichtung 102 senkrecht verlaufenden Richtung gegeneinander versetzt sein, so dass sich die Projektionen der Anlageflächen der Dichtlippen 126 längs der Stapelrichtung 102 im Wesentlichen nicht überlappen.

Eine in Fig. 2 ausschnittsweise dargestellte, nicht erfindungsgemäße, zweite Ausführungsform einer elektrochemischen Einheit 100 für einen Brennstoffzellenstapel unterscheidet sich von der in Fig. 1 dargestellten ersten Ausführungsform dadurch, dass die elektrochemisch aktiven Flächen 132a und 132b der Membran-Elektroden-Einheit 104 zumindest abschnittsweise durch eine Randverstärkungsanordnung 140 begrenzt werden, welche am äußeren Rand der Membran-Elektroden-Einheit 104 angeordnet ist.

Eine solche Randverstärkungsanordnung 140 wird auch als Sub-Gasket bezeichnet.

Eine solche Randverstärkungsanordnung 140 kann zwei Randverstärkungslagen 142, beispielsweise in Form von Randverstärkungsfolien, umfassen, wobei eine kathodenseitige Randverstärkungslage 142a an einer Kathodenseite 144 der Membran-Elektroden-Einheit 104 anliegt, während eine anodenseitige Randverstärkungslage 142b an einer Anodenseite 146 der Membran-Elektroden-Einheit 104 anliegt.

In einem über einen äußeren Rand 148 der Membran-Elektroden-Einheit 104 überstehenden Überstandsbereich 150 sind die beiden Randverstärkungslagen 142a und 142b, vorzugsweise stoffschlüssig, insbesondere durch Heißlaminieren und/oder Kleben, aneinander festgelegt.

Ferner kann vorgesehen sein, dass die kathodenseitige Randverstärkungslage 142a an der Kathodenseite 144 der Membran-Elektroden-Einheit 104, vorzugsweise stoffschlüssig, insbesondere durch Heißlaminieren und/oder Kleben, festgelegt ist und/oder dass die anodenseitige Randverstärkungslage 142b an der Anodenseite 146 der Membran-Elektroden-Einheit 104, vorzugsweise stoffschlüssig, insbesondere durch Heißlaminieren und/oder Kleben, festgelegt ist.

Jede der Randverstärkungslagen 142a, 142b weist vorzugsweise eine Dicke von mindestens ungefähr 10 µm und vorzugsweise höchstens ungefähr 150 µm auf.

Jede dieser Randverstärkungslagen 142a, 142b kann aus einem thermoplastischen, duroplastischen oder elastomeren Polymer gebildet sein, welches vorzugsweise ein Polytetrafluorethylen, ein Polyvinylidenfluorid, einen Polyester, ein Polyamid, ein Copolyamid, ein Polyamid-Elastomer, ein Polyimid, ein Polyurethan, ein Polyurethan-Elastomer, ein Silikon, einen Silikonkautschuk und/oder ein Silikon-basiertes Elastomer umfasst.

Die kathodenseitige Gasdiffusionslage 106a ist bei dieser Ausführungsform in ihrem äußeren Randbereich von der Membran-Elektroden-Einheit 104 abgehoben und liegt vorzugsweise an einer der Membran-Elektroden-Einheit 104 abgewandten Seite der kathodenseitigen Randverstärkungslage 142a an.

Die anodenseitige Gasdiffusionslage 106b ist bei dieser Ausführungsform ebenfalls in ihrem äußeren Randbereich von der Membran-Elektroden-Einheit 104 abgehoben und liegt vorzugsweise an einer der Membran-Elektroden-Einheit 104 abgewandten Seite der anodenseitigen Randverstärkungslage 142b an.

Der der Membran-Elektroden-Einheit 104 zugewandte Rand der kathodenseitigen Randverstärkungslage 142a bildet zugleich den äußeren Rand 130a der kathodenseitigen elektrochemisch aktiven Fläche 132a der Membran-Elektroden-Einheit 104.

Der der Membran-Elektroden-Einheit 104 zugewandte Rand der anodenseitigen Randverstärkungslage 142b bildet zugleich den äußeren Rand 130b der anodenseitigen elektrochemisch aktiven Fläche 132b der Membran-Elektroden-Einheit 104.

Wie aus Fig. 2 zu ersehen ist, ist der äußere Rand 130b der anodenseitigen elektrochemisch aktiven Fläche 132b der Membran-Elektroden-Einheit 104 in einer senkrecht zur Stapelrichtung 102 des Brennstoffzellenstapels und parallel zu den Hauptflächen 136 der Membran-Elektroden-Einheit 104 verlaufenden Richtung 138 gegenüber dem äußeren Rand 130a der kathodenseitigen elektrochemisch aktiven Fläche 132a der Membran-Elektroden-Einheit 104 nach außen, das heißt von dem Zentrum der Membran-Elektroden-Einheit 104 weg, um einen Versatz V versetzt.

Vorzugsweise ist auch bei der zweiten Ausführungsform die anodenseitige elektrochemisch aktive Fläche 132b der Membran-Elektroden-Einheit 104 größer als die kathodenseitige elektrochemisch aktive Fläche 132a der Membran-Elektroden-Einheit 104, so dass kein Bereich der Membran-Elektroden-Einheit 104 nur mit Oxidationsmittel versorgt wird und in keinem Bereich der Membran-Elektroden-Einheit 104 verstärkte Alterungseffekte auftreten.

Durch die Randverstärkungsanordnung 140 wird die Membran-Elektroden-Einheit 104 in ihrem äußeren Randbereich mechanisch stabilisiert.

Die Randverstärkungslagen 142a, 142b können jeweils in Form eines um die Membran-Elektroden-Einheit 104 umlaufenden Rahmens ausgebildet sein.

Die Überlappungsfläche der Randverstärkungslagen 142a und 142b einerseits und der Membran-Elektroden-Einheit 104 andererseits ist so groß gewählt, dass eine ausreichend große Fläche zur mechanischen Anbindung der Randverstärkungslagen 142a, 142b an die Membran-Elektroden-Einheit 104 zur Verfügung steht.

Außerhalb der elektrochemisch aktiven Flächen 132a, 132b der Membran-Elektroden-Einheit 104 und außerhalb des Überlappungsbereiches zwischen den Randverstärkungslagen 142a, 142b und der Membran-Elektroden-Einheit 104 sind ein kathodenseitiges Dichtungselement 152a und ein anodenseitiges Dichtungselement 152b angeordnet.

Dabei können die Dichtungselemente 152a, 152b an der jeweils benachbarten Randverstärkungslage 142a beziehungsweise 142b und/oder an der jeweils benachbarten Bipolarplatte 114a beziehungsweise 114b festgelegt werden.

Auch bei dieser zweiten Ausführungsform beträgt der Versatz V zwischen dem äußeren Rand 130b der anodenseitigen elektrochemisch aktiven Fläche 132b und dem äußeren Rand 130a der kathodenseitigen elektrochemisch aktiven Fläche 132a vorzugsweise mindestens ungefähr 0,1 mm, insbesondere mindestens ungefähr 0,2 mm, und vorzugsweise höchstens ungefähr 0,6 mm, insbesondere höchstens ungefähr 0,4 mm.

Im Übrigen stimmt die in Fig. 2 dargestellte zweite Ausführungsform der elektrochemischen Einheit 100 hinsichtlich Aufbau, Funktion und Herstellungsweise mit der in Fig. 1 dargestellten ersten Ausführungsform überein, auf deren vorstehende Beschreibung insoweit Bezug genommen wird.

Eine in Fig. 3 ausschnittsweise dargestellte dritte Ausführungsform einer elektrochemischen Einheit 100 für einen Brennstoffzellenstapel unterscheidet sich von der in Fig. 1 dargestellten ersten Ausführungsform dadurch, dass die Anbindungsbereiche 124 der Dichtungselemente 108a, 108b, über welche die Dichtungselemente 108a, 108b an die kathodenseitige Gasdiffusionslage 106a beziehungsweise an die anodenseitige Gasdiffusionslage 106b angebunden sind, keine Dichtlippen 126 aufweisen, mit welchen sich die Anbindungsbereiche 124 an der jeweils benachbarten Bipolarplatte 114a beziehungsweise 114b abstützen.

Die Dichtungsbereiche 120 der Dichtungselemente 108a, 108b sind bei dieser Ausführungsform mit einer oder mehreren Dichtlippen 122 versehen, mittels welcher die Dichtungsbereiche 120 sich an der jeweils benachbarten Bipolarplatte 114a, 114b abstützen.

Ferner sind bei dieser Ausführungsform die kathodenseitige Gasdiffusionslage 106a und die anodenseitige Gasdiffusionslage 106b im Wesentlichen deckungsgleich miteinander ausgebildet, so dass die äußeren Ränder 154a und 154b der kathodenseitigen Gasdiffusionslage 106a beziehungsweise der anodenseitigen Gasdiffusionslage 106b - in der Stapelrichtung 102 gesehen - im Wesentlichen übereinander liegen.

Im Übrigen stimmt die in Fig. 3 dargestellte dritte Ausführungsform der elektrochemischen Einheit 100 hinsichtlich Aufbau, Funktion und Herstellungsweise mit der in Fig. 1 dargestellten ersten Ausführungsform überein, auf deren vorstehende Beschreibung insoweit Bezug genommen wird.

Eine in Fig. 4 ausschnittsweise dargestellte vierte Ausführungsform einer elektrochemischen Einheit 100 für einen Brennstoffzellenstapel unterscheidet sich von der in Fig. 3 dargestellten dritten Ausführungsform dadurch, dass bei der vierten Ausführungsform auch die Anbindungsbereiche 124 der Dichtungselemente 108a, 108b mit jeweils mindestens einer Dichtlippe 126 versehen sind, wobei sich der jeweilige Anbindungsbereich 124 mit der jeweiligen Dichtlippe 126 an der jeweils benachbarten Bipolarplatte 114a beziehungsweise 114b abstützt, wie bei der in Fig. 1 dargestellten ersten Ausführungsform.

Bei der vierten Ausführungsform ist aber vorzugsweise vorgesehen, dass die Dichtflächen der Dichtlippen 126 der Anbindungsbereiche 124 der Dichtungselemente 108a, 108b bei Projektion längs der Stapelrichtung 102 einander zumindest teilweise, vorzugsweise im Wesentlichen vollständig, überlappen.

Auch bei der vierten Ausführungsform sind die kathodenseitige Gasdiffusionslage 106a und die anodenseitige Gasdiffusionslage 106b vorzugsweise im Wesentlichen deckungsgleich miteinander ausgebildet und liegen die äußeren Ränder 154a und 154b der kathodenseitigen Gasdiffusionslage 106a beziehungsweise der anodenseitigen Gasdiffusionslage 106b - längs der Stapelrichtung 102 gesehen - vorzugsweise im Wesentlichen übereinander.

Im Übrigen stimmt die in Fig. 4 dargestellte vierte Ausführungsform der elektrochemischen Einheit 100 hinsichtlich Aufbau, Funktion und Herstellungsweise mit der in Fig. 1 dargestellten ersten Ausführungsform überein, auf deren vorstehende Beschreibung insoweit Bezug genommen wird.

## Patentansprüche

1. Elektrochemische Einheit für einen Brennstoffzellenstapel, in dem mehrere Brennstoffzelleneinheiten mit jeweils einer elektrochemischen Einheit (100) längs einer Stapelrichtung (102) aufeinander folgen, umfassend eine Membran-Elektroden-Einheit (104), die eine anodenseitige elektrochemisch aktive Fläche (132b) aufweist, durch welche einer Anode der Membran-Elektroden-Einheit (104) ein Brenngas zuführbar ist und welche einen äußeren Rand (130b) aufweist, der durch ein anodenseitiges Berandungselement (134b) definiert ist, und eine kathodenseitige elektrochemisch aktive Fläche (132a) aufweist, durch welche einer Kathode der Membran-Elektroden-Einheit (104) ein Oxidationsmittel zuführbar ist und welche einen äußeren Rand (130a) aufweist, der durch ein kathodenseitiges Berandungselement (134a) definiert ist,
wobei der äußere Rand (130b) der anodenseitigen elektrochemisch aktiven Fläche (132b) zumindest abschnittsweise gegenüber dem äußeren Rand (130a) der kathodenseitigen elektrochemisch aktiven Fläche (132a) in einer senkrecht zur Stapelrichtung (102) verlaufenden Richtung (138) nach außen versetzt ist und
wobei das anodenseitige Berandungselement (134b) und/oder das kathodenseitige Berandungselement (134a) mindestens ein Dichtungselement (108a, 108b) umfasst,
**dadurch gekennzeichnet,**
**dass** das Dichtungselement (108a, 108b) an eine kathodenseitige Gasdiffusionslage (106a) oder an eine anodenseitige Gasdiffusionslage (106b) angebunden ist, wobei ein Teil der jeweils zugeordneten Gasdiffusionslage (106a, 106b) vom Dichtungsmaterial infiltriert wird.

2. Elektrochemische Einheit nach Anspruch 1, **dadurch gekennzeichnet, dass** der äußere Rand (130b) der anodenseitigen elektrochemisch aktiven Fläche (132b) über seine gesamte Länge hinweg gegenüber dem äußeren Rand (130a) der kathodenseitigen elektrochemisch aktiven Fläche (132a) in einer zur Stapelrichtung (102) senkrecht verlaufenden Richtung (138) nach außen versetzt ist.

3. Elektrochemische Einheit nach einem der Ansprüche 1 oder 2, **dadurch gekennzeichnet, dass** der Versatz (V), um den der äußere Rand (130b) der anodenseitigen elektrochemisch aktiven Fläche (132b) gegenüber dem äußeren Rand (130a) der kathodenseitigen elektrochemisch aktiven Fläche (132a) nach außen versetzt ist, zumindest abschnittsweise mindestens 0,1 mm beträgt.

4. Elektrochemische Einheit nach einem der Ansprüche 1 bis 3, **dadurch gekennzeichnet, dass** der Versatz (V), um den der äußere Rand (130b) der anodenseitigen elektrochemisch aktiven Fläche (132b) gegenüber dem äußeren Rand (130a) der kathodenseitigen elektrochemisch aktiven Fläche (132a) nach außen versetzt ist, höchstens 0,6 mm beträgt.

5. Elektrochemische Einheit nach einem der Ansprüche 1 bis 4, **dadurch gekennzeichnet, dass** der äußere Rand (130b) der anodenseitigen elektrochemisch aktiven Fläche (132b) an keiner Stelle gegenüber dem äußeren Rand (130a) der kathodenseitigen elektrochemisch aktiven Fläche (132a) in einer zur Stapelrichtung (102) senkrechten Richtung (138) nach innen versetzt ist.

6. Elektrochemische Einheit nach einem der Ansprüche 1 bis 5, **dadurch gekennzeichnet, dass** mindestens ein Dichtungselement (108a, 108b) mindestens einen Anbindungsbereich (124), welcher die anodenseitige elektrochemisch aktive Fläche (132b) oder die kathodenseitige elektrochemisch aktive Fläche (132a) berandet, und einen Dichtungsbereich (120), welcher mindestens eine Dichtlippe (122) aufweist, umfasst.

7. Elektrochemische Einheit nach Anspruch 6, **dadurch gekennzeichnet, dass** die Verpresskraft, mit welcher der Anbindungsbereich (124) bei der Montage des Brennstoffzellenstapels verpresst wird, weniger als 50 % der Verpresskraft, mit welcher das gesamte Dichtungselement (108a, 108b) bei der Montage des Brennstoffzellenstapels verpresst wird, beträgt.

8. Elektrochemische Einheit nach einem der Ansprüche 6 oder 7, **dadurch gekennzeichnet, dass** die elektrochemische Einheit (100) ein anodenseitiges Dichtungselement (108b) und ein kathodenseitiges Dichtungselement (108a) umfasst, wobei mindestens eine Dichtlippe (122) des anodenseitigen Dichtungselements (108b) und mindestens eine Dichtlippe (122) des kathodenseitigen Dichtungselements (108a) zumindest teilweise in der Stapelrichtung (102) übereinander angeordnet sind.

9. Elektrochemische Einheit nach einem der Ansprüche 1 bis 8, **dadurch gekennzeichnet, dass** das anodenseitige Berandungselement (134b) und/oder das kathodenseitige Berandungselement (134a) mindestens eine Randverstärkungslage (142a, 142b) umfasst.

10. Elektrochemische Einheit nach einem der Ansprüche 1 bis 9, **dadurch gekennzeichnet, dass** das anodenseitige Berandungselement (134b) und/oder das kathodenseitige Berandungselement (134a) mindestens ein Dichtungselement (108a, 108b) aus einem Elastomermaterial oder eine Randverstärkungsfolie umfasst,
wobei das Dichtungselement (108a, 108b) oder die Randverstärkungsfolie die anodenseitige elektrochemisch aktive Fläche (132b) oder die kathodenseitige elektrochemisch aktive Fläche (132a) berandet.

11. Elektrochemische Einheit nach einem der Ansprüche 1 bis 10, **dadurch gekennzeichnet, dass** das anodenseitige Berandungselement (134b) und/oder das kathodenseitige Berandungselement (134a) an einer Gasdiffusionslage (106a, 106b) der elektrochemischen Einheit (100) festgelegt ist.

12. Elektrochemische Einheit nach einem der Ansprüche 1 bis 11, **dadurch gekennzeichnet, dass** das anodenseitige Berandungselement (134b) und/oder das kathodenseitige Berandungselement (134a) an einer Bipolarplatte (114a, 114b) festgelegt ist und im montierten Zustand des Brennstoffzellenstapels an der Membran-Elektroden-Einheit (104) anliegt.

13. Elektrochemische Einheit nach einem der Ansprüche 1 bis 12, **dadurch gekennzeichnet, dass** das anodenseitige Berandungselement (134b) und/oder das kathodenseitige Berandungselement (134a) an der Membran-Elektroden-Einheit (104) festgelegt ist.

14. Elektrochemische Einheit nach einem der Ansprüche 1 bis 13, **dadurch gekennzeichnet, dass** die anodenseitige elektrochemisch aktive Fläche (132b) der Membran-Elektroden-Einheit (104) größer ist als die kathodenseitige elektrochemisch aktive Fläche (132a) der Membran-Elektroden-Einheit (104).

15. Brennstoffzellenstapel, umfassend mehrere elektrochemische Einheiten (100) nach einem der Ansprüche 1 bis 14, die in der Stapelrichtung (102) aufeinander folgen.

## Claims

1. An electrochemical unit for a fuel cell stack in which a plurality of fuel cell units each comprising an electrochemical unit (100) follow one another along a stacking direction (102), comprising a membrane-electrode unit (104) which comprises an anode-side electrochemically active area (132b) through which a fuel gas is deliverable to an anode of the membrane-electrode unit (104) and which has an outer border (130b) that is defined by an anode-side bordering element (134b), and also comprises a cathode-side electrochemically active area (132a) through which an oxidising agent is deliverable to a cathode of the membrane-electrode unit (104) and which has an outer border (130a) that is defined by a cathode-side bordering element (134a),
wherein the outer border (130b) of the anode-side electrochemically active area (132b) is displaced outwardly at least in some sections with respect to the outer border (130a) of the cathode-side electrochemically active area (132a) in a direction (138) running perpendicularly to the stacking direction (102), and
wherein the anode-side bordering element (134b) and/or the cathode-side bordering element (134a) comprises at least one seal element (108a, 108b),
**characterised in that**
the seal element (108a, 108b) is connected to a cathode-side gas diffusion layer (106a) or to an anode-side gas diffusion layer (106b), wherein part of the respective associated gas diffusion layer (106a, 106b) is infiltrated by the seal material.

2. An electrochemical unit in accordance with claim 1, **characterised in that** the outer border (130b) of the anode-side electrochemically active area (132b) is displaced outwardly over its entire length with respect to the outer border (130a) of the cathode-side electrochemically active area (132a) in a direction (138) running perpendicularly to the stacking direction (102).

3. An electrochemical unit in accordance with either one of claims 1 or 2, **characterised in that** the offset (V) by which the outer border (130b) of the anode-side electrochemically active area (132b) is displaced outwardly with respect to the outer border (130a) of the cathode-side electrochemically active area (132a) amounts, at least sectionally, to at least 0.1 mm.

4. An electrochemical unit in accordance with any one of claims 1 to 3, **characterised in that** the offset (V) by which the outer border (130b) of the anode-side electrochemically active area (132b) is displaced outwardly with respect to the outer border (130a) of the cathode-side electrochemically active area (132a) amounts to at most 0.6 mm.

5. An electrochemical unit in accordance with any one of claims 1 to 4, **characterised in that** no point of the outer border (130b) of the anode-side electrochemically active area (132b) is displaced inwardly with respect to the outer border (130a) of the cathode-side electrochemically active area (132a) in a direction (138) running perpendicularly to the stacking direction (102).

6. An electrochemical unit in accordance with any one of claims 1 to 5, **characterised in that** at least one seal element (108a, 108b) comprises at least one connecting region (124), which bounds the anode-side electrochemically active area (132b) or the cathode-side electrochemically active area (132a), and comprises a sealing region (120), which has at least one sealing lip (122).

7. An electrochemical unit in accordance with claim 6, **characterised in that** the compressive force with which the connecting region (124) is compressed when assembling the fuel cell stack amounts to less than 50% of the compressive force with which the entire seal element (108a, 108b) is compressed when assembling the fuel cell stack.

8. An electrochemical unit in accordance with either one of claims 6 or 7, **characterised in that** the electrochemical unit (100) comprises an anode-side seal element (108b) and a cathode-side seal element (108a), wherein at least one sealing lip (122) of the anode-side seal element (108b) and at least one sealing lip (122) of the cathode-side seal element (108a) are arranged at least partly one above the other in the stacking direction (102).

9. An electrochemical unit in accordance with any one of claims 1 to 8, **characterised in that** the anode-side bordering element (134b) and/or the cathode-side bordering element (134a) comprises at least one border-reinforcing layer (142a, 142b).

10. An electrochemical unit in accordance with any one of claims 1 to 9, **characterised in that** the anode-side bordering element (134b) and/or the cathode-side bordering element (134a) comprises at least one seal element (108a, 108b) made of an elastomeric material or a border-reinforcing film,
wherein the seal element (108a, 108b) or the border-reinforcing film bounds the anode-side electrochemically active area (132b) or the cathode-side electrochemically active area (132a).

11. An electrochemical unit in accordance with any one of claims 1 to 10, **characterised in that** the anode-side bordering element (134b) and/or the cathode-side bordering element (134a) is fixed to a gas diffusion layer (106a, 106b) of the electrochemical unit (100).

12. An electrochemical unit in accordance with any one of claims 1 to 11, **characterised in that** the anode-side bordering element (134b) and/or the cathode-side bordering element (134a) is fixed to a bipolar plate (114a, 114b) and abuts the membrane-electrode unit (104) in the assembled state of the fuel cell stack.

13. An electrochemical unit in accordance with any one of claims 1 to 12, **characterised in that** the anode-side bordering element (134b) and/or the cathode-side bordering element (134a) is fixed to the membrane-electrode unit (104).

14. An electrochemical unit in accordance with any one of claims 1 to 13, **characterised in that** the anode-side electrochemically active area (132b) of the membrane-electrode unit (104) is larger than the cathode-side electrochemically active area (132a) of the membrane-electrode unit (104).

15. A fuel cell stack comprising a plurality of electrochemical units (100) in accordance with any one of claims 1 to 14 which follow one another in the stacking direction (102).

## Revendications

1. Unité électrochimique pour un empilement de piles à combustible, dans lequel plusieurs unités de piles à combustible avec respectivement une unité électrochimique (100) se succèdent le long d'une direction d'empilement (102), comprenant une unité électrodes-membrane (104), qui présente une surface électrochimiquement active côté anode (132b), par laquelle un gaz combustible peut être amené à une anode de l'unité électrode-membrane (104) et laquelle présente un bord extérieur (130b), qui est défini par un élément de bordure côté anode (134b), et une surface électrochimiquement active côté cathode (132a), par laquelle un agent oxydant peut être amené à une cathode de l'unité électrodes-membrane (104) et laquelle présente un bord extérieur (130a), qui est défini par un élément de bordure côté cathode (134a),
dans lequel le bord extérieur (130b) de la surface électrochimiquement active côté anode (132b) est décalé vers l'extérieur au moins en partie par rapport au bord extérieur (130a) de la surface électrochimiquement active côté cathode (132a) dans une direction (138) s'étendant perpendiculairement à la direction d'empilement (102) et
dans laquelle l'élément de bordure côté anode (134b) et/ou l'élément de bordure côté cathode (134a) comprend au moins un élément d'étanchéité (108a, 108b),
**caractérisé en ce**
**que** l'élément d'étanchéité (108a, 108b) est relié à une couche de diffusion de gaz côté cathode (106a) ou à une couche de diffusion de gaz côté anode (106b), dans laquelle une partie de la couche de diffusion de gaz (106a, 106b) respectivement associée est infiltrée par le matériau d'étanchéité.

2. Unité électrochimique selon la revendication 1, **caractérisée en ce que** le bord extérieur (130b) de la surface électrochimiquement active côté anode (132b) est décalé vers l'extérieur au-delà de toute sa longueur par rapport au bord extérieur (130a) de la surface électrochimiquement active côté cathode (132a) dans une direction (138) s'étendant perpendiculairement à la direction d'empilement (102).

3. Unité électrochimique selon l'une quelconque des revendications 1 ou 2, **caractérisée en ce que** le décalage (V) selon lequel le bord extérieur (130b) de la surface électrochimiquement active côté anode (132b) est décalé vers l'extérieur par rapport au bord extérieur (130a) de la surface électrochimiquement active côté cathode (132a) atteint au moins en partie au moins 0,1 mm.

4. Unité électrochimique selon l'une quelconque des revendications 1 à 3, **caractérisée en ce que** le décalage (V), selon lequel le bord extérieur (130b) de la surface électrochimiquement active côté anode (132b) est décalé vers l'extérieur par rapport au bord extérieur (130a) de la surface électrochimiquement active côté cathode (132a), atteint au maximum 0,6 mm.

5. Unité électrochimique selon l'une quelconque des revendications 1 à 4, **caractérisée en ce que** le bord extérieur (130b) de la surface électrochimiquement active côté anode (132b) n'est décalé vers l'intérieur en aucun emplacement par rapport au bord extérieur (130a) de la surface électrochimiquement active côté cathode (132a) dans une direction (138) perpendiculaire à la direction d'empilement (102).

6. Unité électrochimique selon l'une quelconque des revendications 1 à 5, **caractérisée en ce qu'**au moins un élément d'étanchéité (108a, 108b) comprend au moins une zone de liaison (124), laquelle borde la surface électrochimiquement active côté anode (132b) ou la surface électrochimiquement active côté cathode (132a), et une zone d'étanchéité (120), laquelle présente au moins une lèvre d'étanchéité (122).

7. Unité électrochimique selon la revendication 6, **caractérisée en ce que** la force de compression avec laquelle la zone de liaison (124) est comprimée lors du montage de l'empilement de piles à combustible atteint moins de 50 % de la force de compression avec laquelle l'ensemble de l'élément d'étanchéité (108a, 108b) est comprimé lors du montage de l'empilement de piles à combustible.

8. Unité électrochimique selon l'une quelconque des revendications 6 ou 7, **caractérisée en ce que** l'unité électrochimique (100) comprend un élément d'étanchéité côté anode (108b) et un élément d'étanchéité côté cathode (108a), dans lequel au moins une lèvre d'étanchéité (122) de l'élément d'étanchéité côté anode (108b) et au moins une lèvre d'étanchéité (122) de l'élément d'étanchéité côté cathode (108a) sont disposées l'une au-dessus de l'autre au moins en partie dans la direction d'empilement (102).

9. Unité électrochimique selon l'une quelconque des revendications 1 à 8, **caractérisée en ce que** l'élément de bordure côté anode (134b) et/ou l'élément de bordure côté cathode (134a) comprend au moins une couche de renforcement de bord (142a, 142b).

10. Unité électrochimique selon l'une quelconque des revendications 1 à 9, **caractérisée en ce que** l'élément de bordure côté anode (134b) et/ou l'élément de bordure côté cathode (134a) comprend au moins un élément d'étanchéité (108a, 108b) composé d'un matériau élastomère ou une feuille de renforcement de bord,
dans laquelle l'élément d'étanchéité (108a, 108b) ou la feuille de renforcement de bord borde la surface électrochimiquement active côté anode (132b) ou la surface électrochimiquement active côté cathode (132a).

11. Unité électrochimique selon l'une quelconque des revendications 1 à 10, **caractérisée en ce que** l'élément de bordure côté anode (134b) et/ou l'élément de bordure côté cathode (134a) est fixé sur une couche de diffusion de gaz (106a, 106b) de l'unité électrochimique (100).

12. Unité électrochimique selon l'une quelconque des revendications 1 à 11, **caractérisée en ce que** l'élément de bordure côté anode (134b) et/ou l'élément de bordure côté cathode (134a) est fixé sur une plaque bipolaire (114a, 114b) et, dans l'état monté de l'empilement de piles à combustible, s'applique contre l'unité électrodes-membrane (104).

13. Unité électrochimique selon l'une quelconque des revendications 1 à 12, **caractérisée en ce que** l'élément de bordure côté anode (134b) et/ou l'élément de bordure côté cathode (134a) est fixé sur l'unité électrodes-membrane (104).

14. Unité électrochimique selon l'une quelconque des revendications 1 à 13, **caractérisée en ce que** la surface électrochimiquement active côté anode (132b) de l'unité électrodes-membrane (104) est plus grande que la surface électrochimiquement active côté cathode (132a) de l'unité électrodes-membrane (104).

15. Empilement de piles à combustible, comprenant plusieurs unités électrochimiques (100) selon l'une quelconque des revendications 1 à 14, qui se succèdent dans la direction d'empilement (102).
